# EUROPEAN PATENT APPLICATION

(11) **EP 4 776 660 A1**
(43) Date of publication of application: **15.07.2026**
(21) Application number: 24878825.9
(22) Date of filing: 26.09.2024
(51) Int. Cl.: H04W 4/12

(54) **MESSAGE TRANSMISSION METHOD AND APPARATUS**

(30) Priority: 18.10.2023 CN 202311365256
(71) Applicant: HUAWEI TECHNOLOGIES CO., LTD., Shenzhen 518129 (CN)
(72) Inventor: ZHOU, Xiaoyun, Shenzhen, Guangdong 518129 (CN); ZHANG, Yongjing, Shenzhen, Guangdong 518129 (CN); PANG, Feng, Shenzhen, Guangdong 518129 (CN)
(74) Representative: Isarpatent
(86) International application number: PCT/CN2024/121471
(87) International publication number: WO 2025/082179

(57) **Abstract**

This application relates to the field of wireless communication technologies, and provides a message transmission method and an apparatus, to transmit an RCS message through a messaging as a platform device. In the method, a second device receives a first message from the MaaP device, where the first message includes a first identifier of a first terminal device and first content from the first terminal device. The second device sends second content to a first device based on the first identifier and a correspondence, where the second content is determined based on the first content. The correspondence is a correspondence between a second identifier of the first device and a third identifier of the first terminal device. According to the foregoing solution, the first device that currently does not support an RCS service may transmit the RCS message with the first terminal device through interaction between the second device and the MaaP device.

## Description

### CROSS-REFERENCE TO RELATED APPLICATIONS

This application claims priority to Chinese Patent Application No. 202311365256.8, filed with the China National Intellectual Property Administration on October 18, 2023 and entitled "MESSAGE TRANSMISSION METHOD AND APPARATUS", which is incorporated herein by reference in its entirety.

### TECHNICAL FIELD

This application relates to the field of wireless communication technologies, and in particular, to a message transmission method and an apparatus.

### BACKGROUND

Conventional broadcasting, interactive personality television (interactive personality TV, IPTV), and over-the-top (over the top, OTT) video services are increasingly unable to meet viewing requirements of audiences. Integration of social attributes is a future development direction of media services. Real-time content sharing through integration with a 3GPP RCS system is an important technical direction. Digital video broadcasting-internet (digital video broadcasting-internet, DVB-I) defines a discovery mechanism that integrates conventional broadcasting, IPTV, and OTT. To support integration of a DVB system with the 3GPP RCS system, a discovery capability of DVB-I-based RCS services is also an important research topic.

Currently, the DVB system does not support interworking with the 3GPP RCS system. Consequently, a client of the DVB system does not support an RCS service. In other words, the client of the DVB system cannot perform RCS message interworking with a 3GPP terminal device.

### SUMMARY

This application provides a message transmission method and an apparatus, to transmit an RCS message through a messaging as a platform device.

According to a first aspect, a message transmission method is provided. The method may be performed by a second device provided in embodiments of this application, or may be performed by a chip/chip system. In the method, the second device receives a first message from a messaging as a platform (messaging as a platform, MaaP) device, where the first message includes a first identifier of a first terminal device and first content from the first terminal device. The second device sends second content to a first device based on the first identifier and a correspondence, where the second content is determined based on the first content. The correspondence is a correspondence between a second identifier of the first device and a third identifier of the first terminal device.

According to the foregoing solution, the first device that currently does not support an RCS service may transmit an RCS message with the first terminal device through interaction between the second device and the MaaP device.

In a possible implementation, the second device receives a first request message from the first device, where the first request message includes the correspondence between the second identifier and the third identifier.

According to the foregoing solution, the second device may obtain the correspondence between the second identifier and the third identifier based on the first request message of the first device.

In a possible implementation, the second device sends a second message to the first terminal device through the messaging as a platform device, where the second message is used to request the first terminal device to confirm the correspondence. The second device receives a third message from the messaging as a platform device, where the third message indicates that the first terminal device confirms the correspondence. The second device stores the correspondence between the second identifier and the third identifier.

According to this solution, the second device may confirm the correspondence between the second identifier and the third identifier with the first terminal device, and store the correspondence for transmitting the RCS message.

In a possible implementation, the second device receives a second request message from the first device, where the second request message includes the second identifier. The second device receives a fourth message from the messaging as a platform device, where the fourth message includes the first identifier and third content from the first terminal device, and the third content includes the second identifier. The second device stores the correspondence between the second identifier and the third identifier.

According to this solution, the second device may obtain the correspondence between the second identifier and the third identifier based on the fourth message from the first terminal device, and store the correspondence for transmitting the RCS message.

In a possible implementation, the second device receives a third request message from a management platform, where the third request message includes the second identifier and the third identifier. According to this solution, the second device may obtain the correspondence between the second identifier and the third identifier based on the request message from the management platform, and store the correspondence for transmitting the RCS message.

In a possible implementation, when the first message is a text message, the second content is the first content. According to this solution, the first device may receive the text message from the first terminal device.

In a possible implementation, when the first message is a file transfer message, the first content includes a first text link, and the second device obtains the second content from a multimedia content storage device based on the first hypertext link. According to this solution, the first device may receive a file from the first terminal device.

In a possible implementation, the second device receives a fifth message from the first device, where the fifth message includes a fourth identifier of the first terminal device and fourth content. The second device sends a sixth message to the messaging as a platform device, where the sixth message includes the fourth identifier and fifth content, and the fifth content is determined based on the fourth content. According to this solution, the first device may send the RCS message to the first terminal device through the interaction between the second device and the MaaP device.

In a possible implementation, when the fifth message is a text message, the fifth content is the fourth content. According to this solution, the first device may send the text message to the first terminal device.

In a possible implementation, when the fifth message is a file transfer message, the second device sends the fourth content to a multimedia content storage device. The second device receives a second hypertext link from the multimedia content storage device, where the second hypertext link is an address that is of the fourth content and that is stored in the multimedia content storage device, and the fifth content includes the second hypertext link. According to this solution, the first device may send a file to the first terminal device.

In a possible implementation, the second device sends a first card message to the first terminal device through the messaging as a platform device, where the first card message includes a suggested action for message sending. The second device receives a seventh message from the messaging as a platform device, where the seventh message includes the first identifier and sixth content, the sixth content includes the second identifier, and the second identifier is added to the sixth content by the first terminal device based on the suggested action for message sending. The second device stores the correspondence between the second identifier and the third identifier.

According to this solution, the second device may confirm the correspondence between the second identifier and the third identifier with the first terminal device based on the first card message.

According to a second aspect, a message transmission method is provided. The method may be performed by a second device provided in embodiments of this application, or may be performed by a chip/chip system. In the method, the second device receives an eighth message from a messaging as a platform device, where the eighth message includes seventh content, the seventh content includes a second identifier, the second identifier is added to the seventh content by a first terminal device based on a suggested action for message sending of a received first card message, and the second identifier corresponds to a first device. The second device sends a ninth message to the first device, where the ninth message includes eighth content, and the eighth content is determined based on the seventh content.

According to this solution, a second terminal device may send an RCS message to the first device based on the card message. Because the card message is generated by the second device based on the second identifier of the first device, the second identifier of the first device may be automatically filled in the RCS message sent based on the card message. Therefore, the second device can forward the RCS message to the first device for the second terminal device when the correspondence between the second identifier and the third identifier is not stored.

In a possible implementation, when the eighth message is a text message, the eighth content is the seventh content. According to this solution, the second terminal device may send the text message to the first device based on the card message.

In a possible implementation, when the eighth message is a file transfer message, the seventh content includes a third hypertext link, and the second device obtains the eighth content from a multimedia content storage device based on the third hypertext link. According to this solution, the second terminal device may send a file to the first device based on the card message.

According to a third aspect, a service discovery method is provided. The method may be performed by a first device, or may be performed by a chip/chip system. In the method, the first device obtains a service list from a service device, where the service list includes service information of an RCS service. The first device accesses the RCS service based on the service information.

According to this solution, the service information of the RCS service may be added to the service list of the first device, so that the first device can access the RCS service.

In a possible implementation, the service information further includes one or more of the following: service type indication information of the RCS service, service instance information of the RCS service, and information about a linked application of the RCS service. According to this solution, the service information may further include a parameter of the RCS service, so that the first device can access the RCS service.

In a possible implementation, when the service information includes the service instance information of the RCS service, the service instance information further includes a service access address of the RCS. According to this solution, the service information may further include the service access address of the RCS service, so that the first device can access the RCS service.

In a possible implementation, the service instance information of the RCS service further includes a service access protocol of the RCS and a service launch type of the RCS, where the service launch type is that the RCS service is launched after a first device is started. According to this solution, the service information may further include the service access protocol and the service launch type of the RCS service, so that the first device can access the RCS service.

In a possible implementation, when the service information includes the information about the linked application of the RCS service, the service information further includes a startup type of the linked application, and the service launch type is that the RCS service is launched after a first device is started. According to this solution, the service information may further include the information about the linked application of the RCS service and the startup type of the linked application, so that the first device can access the RCS service.

In a possible implementation, the first device sends a first request message to a second device based on the service information, where the first request message includes a correspondence between an identifier of the first device and an identifier of a first terminal device, the first request message is used to request to associate the first device with the first terminal device, and the first terminal device is a terminal device that interacts with the first device through the RCS service. Alternatively, the first device sends a first request message to a second device based on the service information, where the first request message includes an identifier of the first device, and the first request message is used to request to register the first device. Alternatively, the first device sends a first request message to a second device based on the service information, where the first request message includes an identifier of the first device and an identifier of a third terminal device, and the third terminal device is a terminal device that manages the RCS service of the first device.

According to this solution, the first device may request, based on the service information, the second device to bind or associate the first device with the first terminal device, register the first device with the second device, or request the second device to bind or associate the first device with the third terminal device.

According to a fourth aspect, a service discovery method is provided. The method may be performed by a service device, or may be performed by a chip/chip system. In the method, the service device receives a service list request message from a first device, where the service list request message is used to request a service list of the first device. The service device sends the service list to the first device, where the service list includes service information of an RCS service.

In a possible implementation, the service information further includes one or more of the following: service type indication information of the RCS service, service instance information of the RCS service, and information about a linked application of the RCS service.

In a possible implementation, when the service information includes the service instance information of the RCS service, the service instance information further includes a service access address of the RCS.

In a possible implementation, the service instance information of the RCS service further includes a service access protocol of the RCS and a service launch type of the RCS, where the service launch type is that the RCS service is launched after the first device is started.

In a possible implementation, when the service information includes the information about the linked application of the RCS service, the service information further includes a startup type of the linked application, and the service launch type is that the RCS service is launched after the first device is started.

For implementation of beneficial effects of the fourth aspect, refer to the third aspect.

According to a fifth aspect, a message transmission method is provided. The method may be performed by a first terminal device, or may be performed by a chip/chip system. In the method, the first terminal device receives a second message from a messaging as a platform device, where the second message is used to request to confirm a correspondence between a second identifier of a first device and a third identifier of the first terminal device. The first terminal device sends a third message to the messaging as a platform device, where the third message indicates that the first terminal device confirms the correspondence.

In a possible implementation, the first terminal device sends a first message to the messaging as a platform device, where the first message includes a first identifier of the first terminal device and first content sent by the first terminal device.

In a possible implementation, the second message is a first card message, and the first card message includes a suggested action for message sending. The first terminal device sends a ninth message to the messaging as a platform device, where the ninth message includes the third identifier and sixth content, the sixth content includes the first identifier, and the first identifier is added to the sixth content by the first terminal device based on the suggested action for message sending.

In a possible implementation, the first terminal device sends a second card message to a second terminal device, where the second card message is generated based on the first card message, and the second card message includes the suggested action for message sending and the second identifier.

For implementation of beneficial effects of the fifth aspect, refer to the first aspect.

According to a sixth aspect, a communication apparatus is provided, which includes a processing unit and a transceiver unit.

The transceiver unit is configured to receive a first message from a messaging as a platform device, where the first message includes a first identifier of a first terminal device and first content from the first terminal device. The processing unit is configured to determine a second device based on the first identifier and a correspondence. The correspondence is a correspondence between a second identifier of a first device and a third identifier of the first terminal device. The transceiver unit is further configured to send second content to the first device, where the second content is determined based on the first content.

In a possible implementation, the transceiver unit is further configured to receive a first request message from the first device, where the first request message includes the correspondence between the second identifier and the third identifier.

In a possible implementation, the transceiver unit is further configured to send a second message to the first terminal device through the messaging as a platform device, where the second message is used to request the first terminal device to confirm the correspondence. The transceiver unit is further configured to receive a third message from the messaging as a platform device, where the third message indicates that the first terminal device confirms the correspondence. The processing unit is further configured to store the correspondence between the second identifier and the third identifier.

In a possible implementation, the transceiver unit is further configured to receive a second request message from the first device, where the second request message includes the second identifier. The transceiver unit is further configured to receive a fourth message from the messaging as a platform device, where the fourth message includes the first identifier and third content from the first terminal device, and the third content includes the second identifier. The processing unit is further configured to store the correspondence between the second identifier and the third identifier.

In a possible implementation, the transceiver unit is further configured to receive a third request message from a management platform, where the third request message includes the second identifier and the third identifier.

In a possible implementation, when the first message is a text message, the second content is the first content.

In a possible implementation, when the first message is a file transfer message, the first content includes a first text link, and the processing unit is further configured to obtain the second content from a multimedia content storage device based on the first hypertext link. The transceiver unit is further configured to send the second content to the first device.

In a possible implementation, the transceiver unit is further configured to receive a fifth message from the first device, where the fifth message includes a fourth identifier of the first terminal device and fourth content. The transceiver unit is further configured to send a sixth message to the messaging as a platform device, where the sixth message includes the fourth identifier and fifth content, and the fifth content is determined based on the fourth content.

In a possible implementation, when the fifth message is a text message, the fifth content is the fourth content.

In a possible implementation, when the fifth message is a file transfer message, the transceiver unit is further configured to send the fourth content to a multimedia content storage device. The transceiver unit is further configured to receive a second hypertext link from the multimedia content storage device, where the second hypertext link is an address that is of the fourth content and that is stored in the multimedia content storage device, and the fifth content includes the second hypertext link.

In a possible implementation, the transceiver unit is further configured to send a first card message to the first terminal device through the messaging as a platform device, where the first card message includes a suggested action for message sending. The transceiver unit is further configured to receive a seventh message from the messaging as a platform device, where the seventh message includes the first identifier and sixth content, the sixth content includes the second identifier, and the second identifier is added to the sixth content by the first terminal device based on the suggested action for message sending. The processing unit is further configured to store the correspondence between the second identifier and the third identifier.

According to a seventh aspect, a communication apparatus is provided, which includes a processing unit and a transceiver unit.

The transceiver unit is configured to receive an eighth message from a messaging as a platform device, where the eighth message includes seventh content, the seventh content includes a second identifier, the second identifier is added to the seventh content by a first terminal device based on a suggested action for message sending included in a received first card message, and the second identifier corresponds to a first device. The processing unit is configured to generate a ninth message, where the ninth message includes eighth content, and the eighth content is determined based on the seventh content. The transceiver unit is further configured to send the ninth message to the first device.

In a possible implementation, when the eighth message is a text message, the eighth content is the seventh content.

In a possible implementation, when the eighth message is a file transfer message, the seventh content includes a third hypertext link, and the processing unit is further configured to obtain the eighth content from a multimedia content storage device based on the third hypertext link.

According to an eighth aspect, a communication apparatus is provided, which includes a processing unit and a transceiver unit.

The transceiver unit is configured to obtain a service list from a service device, where the service list includes service information of an RCS service. The processing unit is configured to access the RCS service based on the service information.

In a possible implementation, the service information further includes one or more of the following: service type indication information of the RCS service, service instance information of the RCS service, and information about a linked application of the RCS service.

In a possible implementation, when the service information includes the service instance information of the RCS service, the service instance information further includes a service access address of the RCS.

In a possible implementation, the service instance information of the RCS service further includes a service access protocol of the RCS and a service launch type of the RCS, where the service launch type is that the RCS service is launched after a first device is started.

In a possible implementation, when the service information includes the information about the linked application of the RCS service, the service information further includes a startup type of the linked application, and the service launch type is that the RCS service is launched after a first device is started.

In a possible implementation, the transceiver unit is further configured to send a first request message to a second device based on the service information, where the first request message includes a correspondence between an identifier of the first device and an identifier of a first terminal device, the first request message is used to request to associate the first device with the first terminal device, and the first terminal device is a terminal device that interacts with the first device through the RCS service. Alternatively, the transceiver unit is further configured to send a first request message to a second device based on the service information, where the first request message includes an identifier of the first device, and the first request message is used to request to register the first device. Alternatively, the transceiver unit is further configured to send a first request message to a second device based on the service information, where the first request message includes an identifier of the first device and an identifier of a third terminal device, and the third terminal device is a terminal device that manages the RCS service of the first device.

According to a ninth aspect, a communication apparatus is provided, which includes a processing unit and a transceiver unit.

The transceiver unit is configured to receive a service list request message from a first device, where the service list request message is used to request a service list of the first device. The processing unit is configured to generate the service list, where the service list includes service information of an RCS service. The transceiver unit is further configured to send the service list to the first device.

In a possible implementation, the service information further includes one or more of the following: service type indication information of the RCS service, service instance information of the RCS service, and information about a linked application of the RCS service.

In a possible implementation, when the service information includes the service instance information of the RCS service, the service instance information further includes a service access address of the RCS.

In a possible implementation, the service instance information of the RCS service further includes a service access protocol of the RCS and a service launch type of the RCS, where the service launch type is that the RCS service is launched after a first device is started.

In a possible implementation, when the service information includes the information about the linked application of the RCS service, the service information further includes a startup type of the linked application, and the service launch type is that the RCS service is launched after a first device is started.

According to a tenth aspect, a communication apparatus is provided, which includes a processing unit and a transceiver unit.

The transceiver unit is configured to receive a second message from a messaging as a platform device, where the second message is used to request to confirm a correspondence between a second identifier of a first device and a third identifier of the first terminal device. The processing unit is configured to generate a third message, where the third message indicates that the first terminal device confirms the correspondence. The transceiver unit is further configured to send the third message to the messaging as a platform device.

In a possible implementation, the transceiver unit is further configured to send a first message to the messaging as a platform device, where the first message includes a first identifier of the first terminal device and first content sent by the first terminal device.

In a possible implementation, the second message is a first card message, and the first card message includes a suggested action for message sending. The transceiver unit is further configured to send a ninth message to the messaging as a platform device, where the ninth message includes the third identifier and sixth content, the sixth content includes the first identifier, and the first identifier is added to the sixth content by the first terminal device based on the suggested action for message sending.

In a possible implementation, a second card message is sent to a second terminal device, where the second card message is generated based on the first card message, and the second card message includes the suggested action for message sending and the second identifier.

According to an eleventh aspect, a communication apparatus is provided. The communication apparatus may be the communication apparatus according to any one of the possible implementations of the fifth aspect to the eighth aspect in the foregoing embodiments, or a chip disposed in the communication apparatus according to any one of the fifth aspect to the eighth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the second device, the first device, the terminal device, or the service device according to any one of the possible implementations of the first aspect to the fourth aspect.

It should be understood that the communication interface may be implemented through an antenna, a feeder, a codec, and the like in the communication apparatus. Alternatively, if the communication apparatus is a chip disposed in the communication apparatus, the communication interface may be an input/output interface, for example, an input/output pin, of the chip. The communication apparatus may further include a transceiver, which is used by the communication apparatus to communicate with another device.

According to a twelfth aspect, an embodiment of this application provides a chip system. The chip system includes a processor, and may further include a memory, and is configured to implement the method performed by the second device, the first device, the terminal device, or the service device according to any one of the possible implementations of the first aspect to the fourth aspect. In a possible implementation, the chip system further includes a memory, configured to store program instructions and/or data. The chip system may include a chip, or may include a chip and another discrete component.

According to a thirteenth aspect, this application provides a computer-readable storage medium. The computer-readable storage medium stores a computer program or instructions. When the computer program or the instructions are run, the method performed by the second device, the first device, the terminal device, or the service device in the foregoing aspects is implemented.

According to a fourteenth aspect, a computer program product is provided. The computer program product includes computer program code or instructions. When the computer program code or the instructions are run, the method performed by the second device, the first device, the terminal device, or the service device in the foregoing aspects is enabled to be performed.

According to a fifteenth aspect, a communication apparatus is provided. The communication apparatus includes units or modules for performing the methods in the foregoing aspects.

According to a sixteenth aspect, a chip system is provided, which includes a logic circuit and an input/output interface. The logic circuit is configured to perform the method performed by the second device, the first device, the terminal device, or the service device. The input/output interface is configured to communicate with another apparatus.

According to a seventeenth aspect, a system is provided, which includes a second device, a messaging as a platform device, and a first device that perform any one of the possible implementations of the first aspect. Optionally, the system may further include a first terminal device that performs any one of the possible implementations of the fourth aspect. Optionally, the system may further include a service device that performs any one of the possible implementations of the third aspect.

According to an eighteenth aspect, a system is provided, which includes a first device that performs any one of the possible implementations of the second aspect and a service device that performs any one of the possible implementations of the third aspect.

For implementation of beneficial effects of the sixth aspect to the eighteenth aspect, refer to the beneficial effects of the first aspect to the fifth aspect.

### BRIEF DESCRIPTION OF DRAWINGS

FIG. 1 is a diagram of a 5G messaging architecture;
FIG. 2 is a diagram of a service discovery process;
FIG. 3 is a diagram of a communication system according to an embodiment of this application;
FIG. 4 is an example flowchart of a message transmission method according to an embodiment of this application;
FIG. 5 is an example flowchart of another message transmission method according to an embodiment of this application;
FIG. 6 is an example flowchart of another message transmission method according to an embodiment of this application;
FIG. 7 is an example flowchart of another message transmission method according to an embodiment of this application;
FIG. 8 is an example flowchart of another message transmission method according to an embodiment of this application;
FIG. 9 is an example flowchart of another message transmission method according to an embodiment of this application;
FIG. 10 is an example flowchart of another message transmission method according to an embodiment of this application;
FIG. 11 is a diagram of a communication apparatus according to an embodiment of this application;
FIG. 12 is a diagram of another communication apparatus according to an embodiment of this application;
FIG. 13 is a diagram of another communication apparatus according to an embodiment of this application; and
FIG. 14 is a diagram of another communication apparatus according to an embodiment of this application.

### DESCRIPTION OF EMBODIMENTS

For ease of understanding of the technical solutions provided in embodiments of this application, the following describes technical terms used in embodiments of this application.
(1) A rich communication service (rich communication service, RCS) system or an RCS system (also referred to as a 5^{th} generation (5^{th} generation, 5G) mobile communication messaging system) refers to a set of services, including voice call services, video call services, sharing services such as picture sharing and video sharing, and IM services such as message notification, status presentation, address book synchronization file sharing, and instant messaging.

The following describes the technical solutions provided in embodiments of this application.

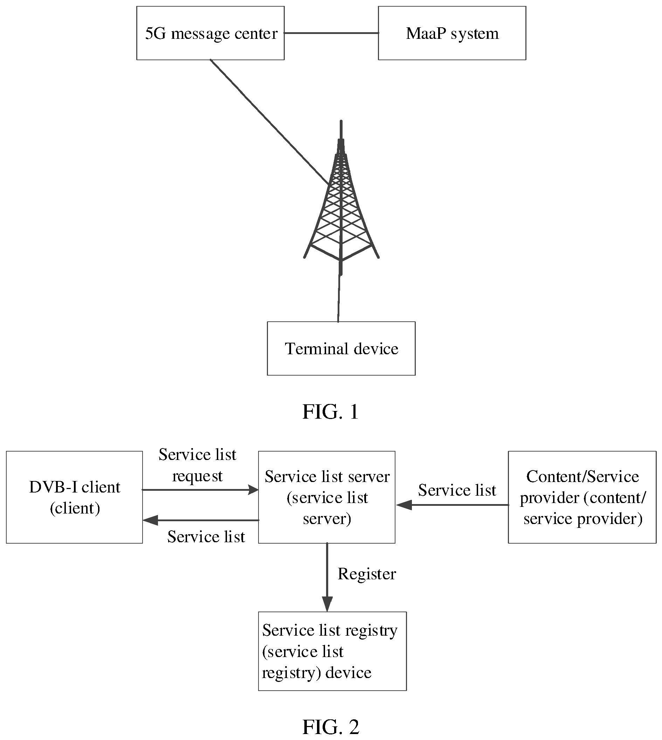

FIG. 1 is a diagram of a 5G messaging (also referred to as RCS, which is the same below) architecture. As shown in FIG. 1, the 5G messaging architecture may include a 5G message center and a MaaP system. A 5G message center (5G message center, 5GMC) device may also be referred to as an RCS application server (application server, AS), has a capability of processing an SMS message and a basic multimedia message, and adds a network interface with a MaaP platform, allowing access to new MaaP industry users. In addition, at the network interface, the 5G message center retains a network interface the same as that of a short message service center, supporting a mobile internet service content application service provider (service provider, SP) and an SMS message application, to provide 5G message sending and receiving functions for a terminal device that supports 5G messaging. The 5GMC device supports direct access to a terminal device through the Internet, for example, a China mobile network (China mobile network, CMNET), including access to the terminal device through a packet switch (packet switch, PS) domain of 2G, 4G, and 5G, access to the terminal device through a wireless local area network (wireless local area network, WLAN), and the like.

The MaaP system includes a MaaP platform management module and the MaaP platform, and may also be referred to as a MaaP device. The MaaP system and a 5GMC are independently deployed. The MaaP platform management module is centrally deployed across an entire network, and adopts a mutual backup approach between two regions, with one instance in a data center per region. The MaaP platform management module is responsible for functions such as access management and authentication of a MaaP service, and uploading and storage of merchant multimedia content (for example, a profile picture). A MaaP platform corresponding to a province is deployed in a specific data center (data center, DC) in a same region as the corresponding province's 5GMC. The platform bears interactive 5G messaging services and is responsible for functions such as access of a MaaP service, uploading of multimedia message content, message review and exchange, and storage of message content for government and enterprise users.

Conventional broadcasting, interactive personality television (interactive personality TV, IPTV), and over-the-top (over the top, OTT) video services are increasingly unable to meet viewing requirements of audiences. Integration of social attributes is a future development direction of media services. Real-time content sharing through integration with a 3GPP RCS system is an important technical direction. Digital video broadcasting-internet (digital video broadcasting-internet, DVB-I) defines a discovery mechanism that integrates conventional broadcasting, IPTV, and OTT. To support integration of a DVB system with the 3GPP RCS system, a discovery capability of DVB-I-based RCS services is also an important research topic.

FIG. 2 shows a service discovery process. A content/service provider (content/service provider) sends an available service list (service list) to a service list server (service list server). The service list server registers an access entry address (uniform resource locator, URL) of the service list with a service list registry (service list registry) device. When a DVB-I client (client), for example, a set-top box, needs to discover a service (service), the DVB-I client obtains the access entry address of the service list from the service list registry through an address of the service list registry. Then, a DVB-I queries the service list through the access entry address. One service list may include service information, as shown in Table 1.

| |
|---|
| DVB-I service (service) |
| Unique service identifier (unique service ID) |
| Service name (service name) |
| Provider name (provider name) |
| Logo (logo) |
| Service type (type) |
| Genre (genre) |
| Service instance (service instance) |

As shown in Table 1, the service information mainly includes the unique service identifier (unique service ID), the service name (service name), the provider name (provider name), the service type (type), the genre (genre), and the service instance (service instance). Currently, service types supported by the DVB-I include linear radio (linear-radio), frequency modulation (on demand), frequency modulation radio (on demand-radio), data (data), and mosaic (mosaic).

If the service also has an additional service capability of a linked application, the service information further includes information about the linked application (linked application).

Descriptions of the service instance are shown in Table 2.

| |
|---|
| DVB-I service instance (service instance) |
| Priority (priority) |
| Source type (source type) |
| Delivery parameters (delivery parameters) |
| Content attributes (content attributes) |
| Related material (related material) |

As shown in Table 2, the priority (priority), the source type (source type), the delivery parameters (delivery parameters), the content attributes (content attributes), and the related material (related material) may be used for description. The source type (source type) describes a type of a service source. The content attributes (content attributes) are used to identify types of audio (audio) and video (video) supported by the service instance and captioning (captioning) and signing (signing) that are added to a picture or an image.

Currently, the DVB system does not support interworking with the 3GPP RCS system. Consequently, a client of the DVB system does not support the RCS service. In other words, the client of the DVB system cannot perform RCS message interworking with a 3GPP terminal device.

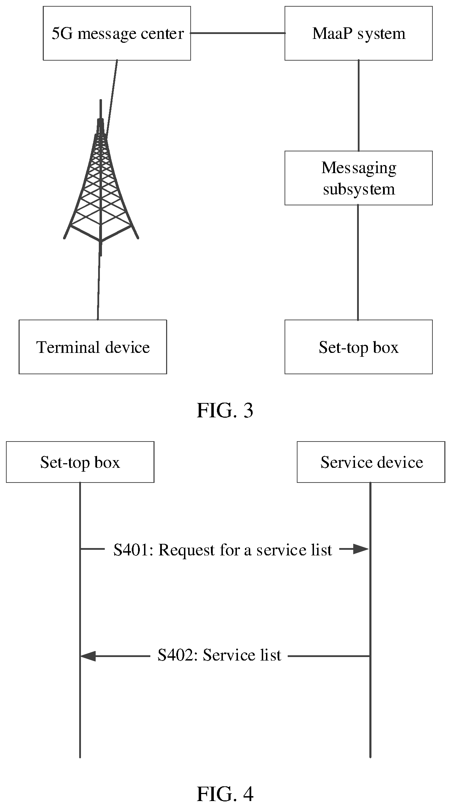

In view of this, an embodiment of this application provides a message transmission method. In the method, a messaging subsystem may be deployed on a video platform, as shown in FIG. 3. The messaging subsystem accesses a MaaP system in a form of chatbot (Chatbot), and is responsible for RCS message forwarding between a device that does not support an RCS service, for example, a device of a DVB system, and a 3GPP terminal device. According to the foregoing solution, the deployed messaging subsystem accesses the MaaP system, so that message interaction between the device that does not support the RCS service and a terminal that supports the RCS service (for example, the 3GPP terminal device) can be implemented. In the present invention, the device that does not support the RCS service may be a set-top box, a smart television, a tablet computer (PAD), or the like.

For ease of description, an example in which the set-top box is the device that does not support the RCS service and a terminal device is the 3GPP terminal device is used for description.

Generally, after submitting client materials to an operator of the messaging subsystem in this application, selecting a billing plan, and applying for and activating an account, a chatbot (Chatbot) service provider obtains a chatbot ID (Chatbot_id). In this case, a session initiation protocol (session initialization protocol, SIP) uniform resource identifier (uniform resource identifier, URI) of the messaging subsystem is <Chatbot_id>@botplatform.rcs.chinamobile.com. When the terminal device needs to send an RCS message to the set-top box, because a destination address of the RCS message is the SIP URI of the messaging subsystem, in embodiments of this application, how the messaging subsystem sends the RCS message to a correct set-top box further needs to be resolved.

The following describes a service discovery process of the DVB system.

FIG. 4 is an example flowchart of a message transmission method. The method may include the following operations.

S401: A set-top box requests a service list from a service device.

For example, the set-top box may send a request message to the service device, for example, a service list server (service list server) shown in FIG. 2, to request to obtain the service list.

S402: The service device sends the service list to the set-top box.

Correspondingly, the set-top box receives the service list from the service device.

The service list may include service (service) information, for example, may include information about a service supported by the set-top box.

In a possible implementation, the service information may include service information of an RCS service. In other words, in this embodiment of this application, a type of the RCS service may be added to service information of the DVB system. The service information may be manually configured offline, or configured through interaction between a content/service provider and the service device. The service information may include one or more of service type indication information, service instance information, and information about a linked application.

For example, the service type (service type) indication information indicates that the service is an RCS service. If the RCS service is natively supported by a DVB-I client, the service information includes the service instance (service instance) information. If the RCS service is application-supported, the service information may further include the information about the linked application (linked application), and may indicate an application that supports the RCS service.

In a possible case, the service instance information may further include a URI. For example, delivery parameters may include the URI. Optionally, the service instance information may further include a service access protocol and a service launch type. For a user whose service launch type is an RCS service, for example, the service launches automatically after the set-top box is started.

The following Table 3 describes the service information of the RCS service provided in this embodiment of this application.

**Table 3: Example of service information of an RCS service**

| Service (Service) information | | |
|---|---|---|
| Type (type) | RCS | |
| Genre (genre) | Tour (tour), food (food), ... | |
| Linked application (linked application) | RCS application | |
| Service instance (service instance) | Delivery parameters (bidirectional delivery parameters) | Service access address URI |
| | | Service access protocol (protocol): HTTP and SIP |
| | Launch type (launch type) | For a user of an RCS service, a service launches automatically (auto launch when the client launches). |

As shown in Table 3, the service information of the RCS service may indicate through the type (type) that the service is an RCS service. The service information may further include a genre (genre). If the RCS service is natively supported by the DVB-I client, the service information may include the service instance (service instance). In the service instance, the delivery parameters (bidirectional delivery parameters) may include the service access address and the service access protocol, for example, the hypertext transfer protocol (hypertext transfer protocol, HTTP) and the SIP. The launch type (launch type) indicates that the service launches automatically for the user of the RCS service. If the RCS service is application-supported, the service information may further include the information about the linked application (linked application), and may indicate the application that supports the RCS service.

Based on the solution shown in FIG. 4, the DVB system may support the RCS service.

The following describes a technical solution in which a set-top box performs RCS message interworking with a terminal device. To send an RCS message to a correct set-top box, a messaging subsystem in this embodiment of this application may obtain a correspondence between the set-top box and the terminal device.

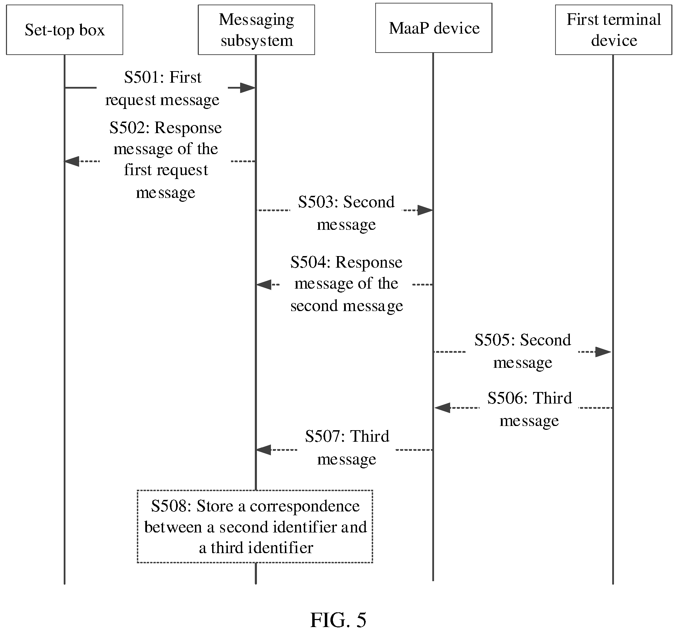

FIG. 5 is an example flowchart of a message transmission method. The method may include the following operations.

S501: A set-top box sends a first request message to a messaging subsystem.

Correspondingly, the messaging subsystem receives the first request message from the set-top box.

The first request message may include a correspondence between a second identifier of the set-top box and a third identifier of a first terminal device. The second identifier may be used to identify the set-top box, for example, may be a fixed code number of the set-top box, a public switched telephone network (public Switched telephone network, PSTN) number, a SIP URI constructed by the set-top box based on a PSTN, or a factory serial number of the set-top box. Similarly, the third identifier may be used to identify the first terminal device, for example, may be a mobile subscriber international integrated service digital network (mobile subscriber international integrated service digital network, MSISDN) number, or a SIP URI constructed based on an MSISDN, a public land mobile network (International Mobile Subscriber Identity, IMSI) number, or a domain name constructed based on IMSI. For example, the first request message may be a registration request message, which is used to request to register the set-top box or used to request to bind the set-top box and the first terminal device.

In a possible case, the set-top box may present service information to a user based on the service list obtained in the embodiment shown in FIG. 4, for example, may present the service information to the user on a display device connected in a wired or wireless manner. The user may select the RCS service on the display device, for example, may select the RCS service by using a remote control or by touching, and enter, based on a prompt, the third identifier of the to-be-bound first terminal device. The display device may send the third identifier of the first terminal device to the set-top box based on content entered by the user.

Optionally, if the RCS service needs to depend on an application, the set-top box may activate the application after the user selects the RCS service. The user may enter, based on the prompt of the application, the third identifier of the to-be-bound first terminal device. The display device may send the third identifier of the first terminal device to a management platform of the application based on the content entered by the user. Because the application is activated by the set-top box, the management platform of the application may also obtain the second identifier of the set-top box.

After obtaining the third identifier, the set-top box or the management platform of the application may send the first request message to the messaging subsystem. The set-top box or the management platform of the application may send the first request message to the messaging subsystem based on a service access address of the RCS.

In a possible implementation, the first request message may be sent by a second terminal device to the messaging subsystem through a video management platform, and the second terminal device may be a terminal device that is bound when subscribing to the RCS service. For example, the second terminal device may access the video management platform, and send the first request message to the video management platform. The first request message may include the second identifier of the set-top box and the third identifier of the first terminal device. It may be understood that the second identifier of the set-top box and the third identifier of the first terminal device may be entered by the user, and the video management platform may obtain the entered second identifier and the entered third identifier. The video management platform may send the first request message to the messaging subsystem. Optionally, after performing authorization based on subscription information of the second terminal device, the video management platform may send a response message of the first request message to a second terminal device.

In a possible implementation, when the user subscribes to and registers an account, the video management platform sends the first request message to the messaging subsystem. The first request message may include the second identifier of the set-top box and the third identifier of the first terminal device. It may be understood that, during subscription, the video management platform obtains the second identifier and the third identifier.

Optionally, the embodiment shown in FIG. 5 may further include the following operations S502 to S508.

S502: The messaging subsystem sends the response message of the first request message.

Correspondingly, the set-top box or the management platform of the application receives the response message of the first request message from the messaging subsystem. Optionally, the response message of the first request message may indicate that the set-top box has received the first request message or has obtained the correspondence between the second identifier and the third identifier.

S503: The messaging subsystem sends a second message to a MaaP device.

Correspondingly, the MaaP device receives the second message from the messaging subsystem.

In this embodiment of this application, the messaging subsystem may access the MaaP device in a form of chatbot, and the messaging subsystem may invoke an application programming interface (application programming interface, API) to send the second message to the MaaP device. The second message is used to request the first terminal device to confirm the correspondence between the second identifier and the third identifier. The second message may include a first identifier of the first terminal device, and the first identifier may correspond to the third identifier. In other words, the first identifier is the same as the third identifier. For example, both the first identifier and the third identifier are SIP URIs of the first terminal device. Alternatively, the first identifier is constructed based on the third identifier. For example, the third identifier is an MSISDN, and the first identifier is a SIP URI determined based on the third identifier. The messaging subsystem may derive each other based on the first identifier and the third identifier. For example, the messaging subsystem may determine the third identifier based on the first identifier, or may determine the first identifier based on the third identifier. For example, in the second message, the first identifier is a destination address field of the second message. The MaaP device may determine the first terminal device based on the first identifier.

In a possible implementation, the second message may include a first card message. The messaging subsystem may construct the first card message based on the second identifier of the set-top box (in other words, the first card message includes the second identifier). The first card message may include one or more of suggested actions such as binding confirmation, binding management, card sharing, and message sending. An example in which the first card message includes the suggested action for binding confirmation is used for description.

S504: The MaaP device sends a response message of the second message to the messaging subsystem.

Correspondingly, the messaging subsystem receives the response message of the second message from the MaaP device. Optionally, the response message of the second message may indicate that the MaaP device has processed the second message or has received the second message. For example, the response message of the second message may be an HTTP status code 200OK, which indicates that a request has been successfully processed on a server.

S505: The MaaP device sends the second message to the first terminal device.

Correspondingly, the first terminal device receives the second message from the MaaP device.

In a possible case, the MaaP device may send the second message to the first terminal device through a 5GMC. For example, the MaaP device may invoke an API to send the second message to the 5GMC, and the 5GMC sends the second message to the first terminal device. Optionally, the 5GMC may send the response message of the second message, for example, the HTTP status code 200OK to the MaaP device. The 5GMC may send the second message to the first terminal device through a SIP information (message). Optionally, the first terminal device may send the response message of the second message, for example, the SIP status code 200OK, to the 5GMC to indicate that the request has been successfully processed or has been received.

S506: The first terminal device sends a third message to the MaaP device.

Correspondingly, the MaaP device receives the third message from the first terminal device. The third message indicates that the first terminal device confirms the correspondence between the second identifier and the third identifier.

For example, the first terminal device may display content of the second message on a display interface, and the user may perform an operation based on the display interface to confirm the correspondence. For example, "Confirm to bind the set-top box **** (**** indicates the second identifier). Enter 1 to confirm" is displayed on a screen. The first terminal device may send the third message to the 5GMC in response to the user operation. For example, the user replies to the message, and enters and sends message content "1".

In a possible case, the first terminal device may send the third message to the MaaP device through the 5GMC. For example, the first terminal device may send the third message to the 5GMC, for example, send a SIP message to the 5GMC. The 5GMC may invoke an API to send the third message to the MaaP device. The third message may include the first identifier and a SIP URI of the messaging subsystem. For example, the first identifier may be a source address field of the third message, the source address field may be a SIP URI determined based on the third identifier of the first terminal device, and the destination address field is the SIP URI of the messaging subsystem.

In a possible implementation, the third message may be sent by the first terminal device based on the first card message. For example, the first terminal device may display content of the first card message on the display interface. The displayed card content includes identification information of the set-top box, for example, "Operation card of the set-top box **** (**** indicates the second identifier)" and a plurality of options for suggested actions such as binding confirmation, message sharing, and message sending. After the user selects the option for binding confirmation, the first terminal device may send the third message to the MaaP device in response to the user operation. Message content of the third message includes the second identifier of the set-top box, and the second identifier may be added to the message content of the third message based on the suggested action for binding confirmation. For example, the second identifier may be automatically added to the third message. The third message may further include the first identifier. For example, the first identifier may be the source address field of the third message, the source address field may be the SIP URI determined based on the third identifier of the first terminal device, and the destination address field is the SIP URI of the messaging subsystem.

S507: The MaaP device sends the third message to the messaging subsystem.

Correspondingly, the messaging subsystem receives the third message from the MaaP device.

For example, the MaaP device invokes the API interface to send the third message to the messaging subsystem.

S508: The messaging subsystem stores the correspondence between the second identifier and the third identifier.

The messaging subsystem may determine the corresponding third identifier based on the first identifier in the third message, to store the second identifier and the third identifier. It may be understood that the correspondence between the second identifier and the third identifier may be a correspondence table, or may be in another form. This is not specifically limited in this application.

Optionally, the messaging subsystem may further send a registration request confirmation message to the set-top box, which indicates that the set-top box is successfully registered or indicates that the set-top box has been bound to the first terminal device.

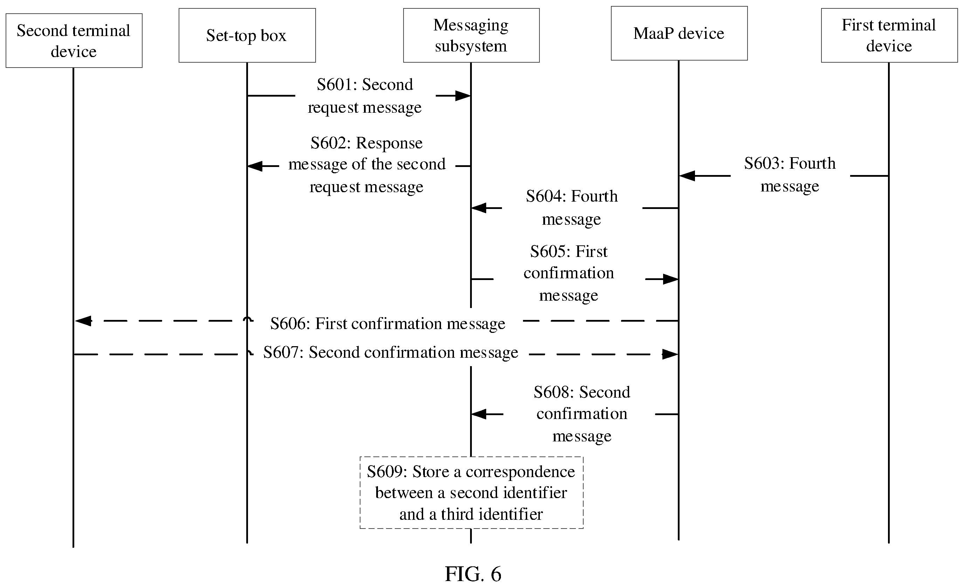

Based on the embodiment shown in FIG. 5, the messaging subsystem may obtain the correspondence between the second identifier of the set-top box and the third identifier of the first terminal device. In the embodiment shown in FIG. 5, a technical solution in which the set-top box requests to bind the set-top box to the first terminal device is shown. The following shows, by using FIG. 6, a technical solution in which the first terminal device requests to bind the set-top box to the first terminal device.

FIG. 6 is an example flowchart of a message transmission method according to an embodiment of this application. The method may include the following operations.

S601: A set-top box sends a second request message to a messaging subsystem.

Correspondingly, the messaging subsystem receives the second request message from the set-top box.

The second request message may include a second identifier of the set-top box, and the second request message may request to register with the messaging subsystem. For example, the second request message may be a registration request message.

Optionally, the embodiment shown in FIG. 6 may further include the following operation S602.

S602: The messaging subsystem sends a response message of the second request message to the set-top box.

Correspondingly, the set-top box receives the response message of the second request message from the messaging subsystem.

The response message of the second request message may indicate that registration succeeds. For example, the response message of the second request message may be a registration request response message.

S603: A first terminal device sends a fourth message to a MaaP device.

Correspondingly, the MaaP device receives the fourth message from the first terminal device.

The fourth message may include a first identifier and third content from the first terminal device, and the third content may include the second identifier. The fourth message may be used to request to bind the first terminal device and the set-top box. The first identifier corresponds to the third identifier. For example, the first identifier is the same as the third identifier. For example, both the first identifier and the third identifier are SIP URIs of the first terminal device. Alternatively, the first identifier is constructed based on the third identifier. For example, the third identifier is an MSISDN, and the first identifier is a SIP URI determined based on the third identifier. The messaging subsystem may derive each other based on the first identifier and the third identifier. For example, the first identifier is a source address field of the fourth message. A destination address field of the fourth message may be a SIP URI of the messaging subsystem.

In a possible case, the first terminal device may send the fourth message to the MaaP device through a 5GMC. For example, the first terminal device may send a SIP message to the 5GMC, and the SIP message may carry the fourth message. The 5GMC may invoke an API to send the fourth message to the MaaP device.

S604: The MaaP device sends the fourth message to the messaging subsystem.

Correspondingly, the MaaP device receives the fourth message from the messaging subsystem.

For example, the MaaP device may invoke an API to send the fourth message to the messaging subsystem.

In this way, the messaging subsystem can determine the corresponding third identifier based on the first identifier included in the fourth message, and obtain a correspondence between the second identifier and the third identifier based on the second identifier included in the fourth message.

Optionally, the embodiment shown in FIG. 6 may further include the following operations S605 to S609, which are used to confirm the correspondence between the second identifier and the third identifier to the second terminal device. The second terminal device may be a terminal device that is bound when subscribing to an RCS service.

S605: The messaging subsystem sends a first confirmation message to the MaaP device.

Correspondingly, the MaaP device receives the first confirmation message from the messaging subsystem. A destination address field of the first confirmation message is a SIP URI of the second terminal device. A source address field of the first confirmation message is the SIP URI of the messaging subsystem. Content of the first confirmation message includes the correspondence between the second identifier and the third identifier, and is used to request the second terminal device to confirm the correspondence. For example, the messaging subsystem may invoke an API to send the first confirmation message to the MaaP device.

S606: The MaaP device sends the first confirmation message to the second terminal device.

Correspondingly, the second terminal device receives the first confirmation message from the MaaP device.

In a possible case, the MaaP device may send the first confirmation message to the second terminal device through the 5GMC. For example, the MaaP device may invoke an API to send the first confirmation message to the 5GMC, and the 5GMC may invoke an API to send the first confirmation message to the second terminal device.

S607: The second terminal device sends a second confirmation message to the MaaP device.

Correspondingly, the MaaP device receives the second confirmation message from the second terminal device.

In a possible case, the second terminal device may send the second confirmation message to the MaaP device through the 5GMC. For example, the second terminal device may send the second confirmation message to the 5GMC, and the 5GMC may send the second confirmation message to the MaaP device. For example, the second confirmation message may include an HTTP status code 200OK.

S608: The MaaP device sends the second confirmation message to the messaging subsystem.

Correspondingly, the messaging subsystem receives the second confirmation message from the MaaP device.

S609: The messaging subsystem stores the correspondence between the second identifier and the third identifier.

Based on the embodiment shown in FIG. 6, based on an operation of the first terminal device, the messaging subsystem may also obtain the correspondence between the second identifier and the third identifier.

The following describes a technical solution in which the first terminal device sends an RCS message to the set-top box.

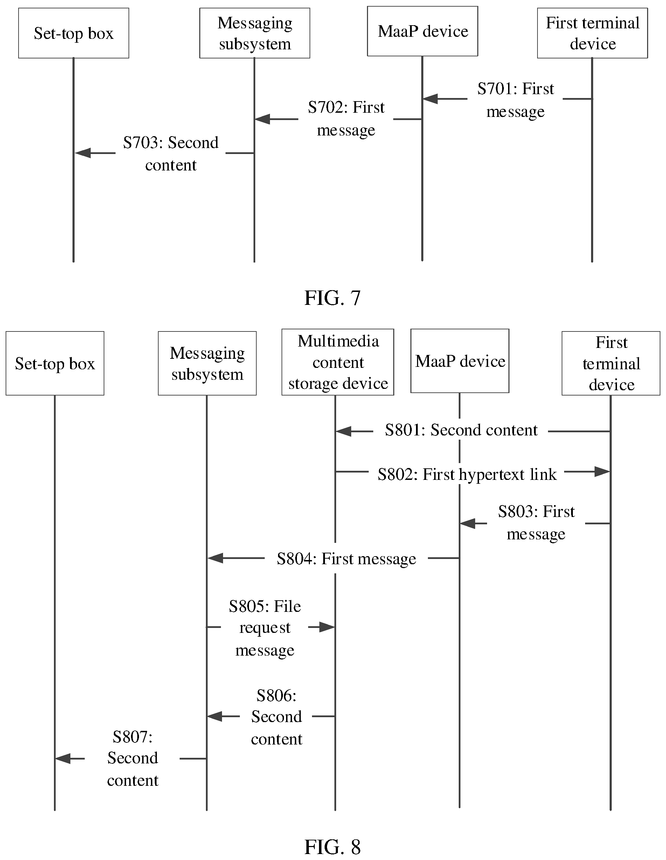

FIG. 7 is an example flowchart of a message transmission method according to an embodiment of this application. The method may include the following operations.

S701: A first terminal device sends a first message to a MaaP device.

Correspondingly, the MaaP device receives the first message from the first terminal device.

The first message may include a first identifier and first content, and the first content may be content sent by a user to a set-top box through the first terminal device. In S701, the first identifier may correspond to a third identifier (in other words, the first identifier is the same as the third identifier, or the first identifier is constructed based on the third identifier). For example, the first identifier may be a source address field of the first message. For example, the first message is a text message or a file transfer message.

In a possible case, the first terminal device may send the first message to the MaaP device through a 5GMC. For example, the first terminal device may send a SIP message to the 5GMC, and the SIP message is the first message. Optionally, the 5GMC sends a SIP status code 200OK to the first terminal device. The 5GMC may send the first message to the MaaP device. Optionally, the MaaP device may send an HTTP status code 200OK to the 5GMC.

In a possible implementation, a first card message may include a suggested action for message sending. After the user selects an option for the suggested action for message sending in the first card message and enters to-be-sent content, the first terminal device sends the first message to a messaging as a platform. The first message may include a second identifier of the set-top box, and the second identifier may be added to the first message, for example, the first content, based on the suggested action for message sending.

S702: The MaaP device sends the first message to the messaging subsystem.

Correspondingly, the messaging subsystem receives the first message from the MaaP device.

Optionally, the messaging subsystem may send the HTTP status code 200OK to the MaaP device.

S703: The messaging subsystem sends second content to the set-top box.

Correspondingly, the set-top box receives the second content from the messaging subsystem. The second content corresponds to the first content, or the second content may be determined based on the first content.

In a possible implementation, the messaging subsystem stores the correspondence, and the messaging subsystem may determine the third identifier based on the first identifier. The first identifier is the same as the third identifier, or the first identifier is constructed, determined, or generated based on the third identifier. The messaging subsystem may determine the corresponding second identifier based on the stored correspondence between the second identifier and the third identifier and the determined third identifier, so that the messaging subsystem can determine the corresponding set-top box, and send the second content to the set-top box. The messaging subsystem sends the first content as the second content to the set-top box.

In another possible implementation, the first content of the first message includes the second identifier, and the messaging subsystem may determine the corresponding set-top box based on the second identifier, and send the second content to the set-top box. The messaging subsystem sends the first content as the second content to the set-top box, or deletes the second identifier included in the first content and then sends the first content as the second content to the set-top box.

Optionally, the set-top box may send a response message to the messaging subsystem. The response message may indicate that the second content has been received.

Based on the embodiment shown in FIG. 7, RCS message interworking between the set-top box and the first terminal device may be implemented through the messaging subsystem.

In the embodiment shown in FIG. 7, the second content varies due to different types of the first message. In a possible case, the first message may be a text message. When the first message is a text message, the second content may be the first content or may be obtained by modifying the first content, for example, deleting the second identifier in the first content. In another possible case, the first message may be a file transfer message. When the first message is a file transfer message, the first content may include a first hypertext link, and the second content may be obtained based on the first hypertext link. The following provides descriptions with reference to FIG. 8.

FIG. 8 is an example flowchart of a message transmission method according to an embodiment of this application. The method may include the following operations.

S801: A first terminal device sends second content to a multimedia content storage device.

Correspondingly, the multimedia content storage device receives the second content from the first terminal device.

For example, the first terminal device may send an HTTP POST (POST) message to the multimedia content storage device. The HTTP POST message may carry the second content.

S802: The multimedia content storage device sends a first hypertext link to the first terminal device.

Correspondingly, the first terminal device receives the first hypertext link from the multimedia content storage device.

The first hypertext link may be an address link for storing the second content. For example, the multimedia content storage device may send an HTTP status code 200OK to the first terminal device, and carry the first hypertext link.

For implementation of S803 and S804, refer to S701 and S702. A difference lies in that message content includes the first hypertext link.

S805: A messaging subsystem sends a file request message to the multimedia content storage device.

Correspondingly, the multimedia content storage device receives the file request message from the messaging subsystem.

The file request message may be used to request the second content, and the file request message may carry the first hypertext link. For example, the file request message may be an HTTP GET message.

S806: The multimedia content storage device sends the second content to the messaging subsystem.

Correspondingly, the messaging subsystem receives the second content from the multimedia content storage device. For example, the multimedia content storage device may send the HTTP status code 200OK to the messaging subsystem, and carry the second content.

For implementation of S807, refer to S703.

Based on the embodiment shown in FIG. 8, a set-top box may receive a file of the first terminal device through the messaging subsystem.

In this embodiment of this application, a first card message may be further shared with another terminal device. For example, the first card message may include an option for a suggested action for card sharing, and the first terminal device may generate a second card message based on the first card message and the suggested action for card sharing, and then share the second card message with another terminal device, for example, a second terminal device. The second terminal device may send an RCS message to the set-top box based on the shared second card message. When an RCS message is sent based on a card message, a second identifier of the set-top box may be automatically filled in. In this way, the messaging subsystem may determine the corresponding set-top box based on the second identifier, and may also send the RCS message to the corresponding set-top box when the messaging subsystem does not store a bonding relationship between the set-top box and a terminal device. It may be understood that, for an operation of sending the RCS message to the set-top box by the second terminal device based on the card message, refer to FIG. 7 and FIG. 8. Repeated descriptions are not described again.

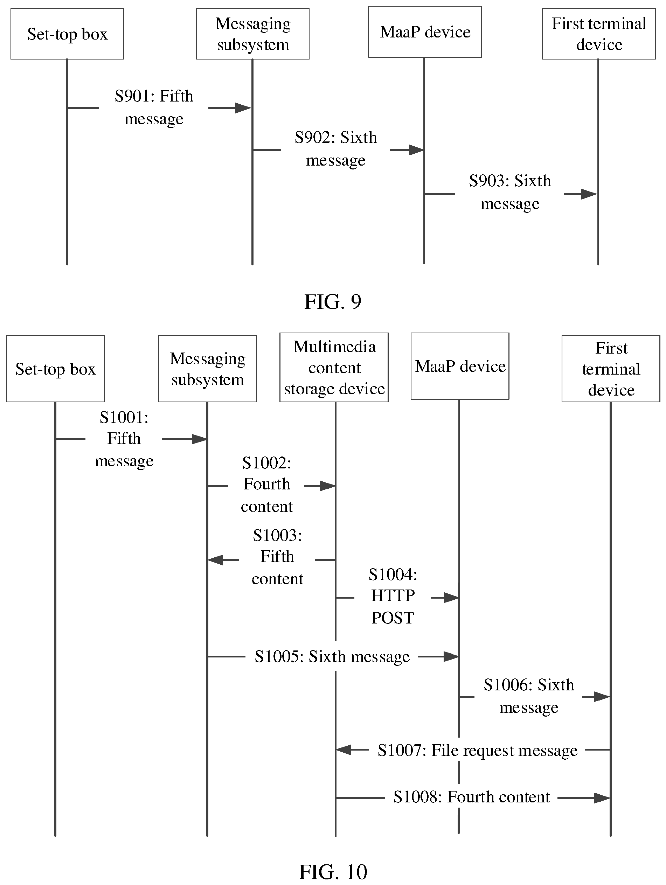

In an embodiment of this application, the set-top box may also send the RCS message to the first terminal device. The following provides descriptions with reference to FIG. 9.

FIG. 9 is an example flowchart of a message transmission method according to an embodiment of this application. The method may include the following operations.

S901: A set-top box sends a fifth message to a messaging subsystem.

Correspondingly, the messaging subsystem receives the fifth message from the set-top box.

The fifth message may include a fourth identifier and fourth content. The fourth identifier may correspond to a third identifier, or the fourth identifier may be determined based on the third identifier. For example, the fourth identifier is the same as the third identifier. For example, both the fourth identifier and the third identifier are SIP URIs of a first terminal device. For another example, the fourth identifier is constructed based on the third identifier. For example, the third identifier is an MSISDN, and the fourth identifier is a SIP URI determined based on the third identifier. The messaging subsystem may derive each other based on the third identifier and the fourth identifier. For example, the messaging subsystem may determine the fourth identifier based on the third identifier, or may determine the third identifier based on the fourth identifier. For example, the fourth identifier is a destination address field of the fifth message, and a source address field of the fifth message may be a SIP URI determined by a second identifier of the set-top box.

Optionally, the messaging subsystem sends a response message to the set-top box. The response message indicates that the fifth message has been received.

S902: The messaging subsystem sends a sixth message to a MaaP device.

Correspondingly, the MaaP device receives the sixth message from the messaging subsystem.

The sixth message may include the fourth identifier and fifth content, and the fifth content corresponds to the fourth content, or the fifth content is determined based on the fourth content. A source address field of the sixth message may be a SIP URI of the messaging subsystem. Optionally, the MaaP device may send an HTTP status code 200OK to the messaging subsystem.

S903: The MaaP device sends the sixth message to the first terminal device.

Correspondingly, the first terminal device receives the sixth message from the MaaP device.

In a possible case, the MaaP device may send the sixth message to the first terminal device through a 5GMC. For example, the MaaP device may send the sixth message to the 5GMC. Optionally, the 5GMC may send the HTTP status code 200OK to the MaaP device. The 5GMC may send the sixth message to the first terminal device. Optionally, the first terminal device may send a SIP status code 200OK to the 5GMC.

In the embodiment shown in FIG. 9, the fifth content varies due to different types of the fifth message. In a possible case, the fifth message may be a text message. When the fifth message is a text message, the fifth content may be the fourth content or may be obtained by modifying the fourth content. In another possible case, the fifth message may be a file transfer message. When the fifth message is a file transfer message, the fifth content may include a second hypertext link, and the fourth content may be obtained based on the second hypertext link. The following provides descriptions with reference to FIG. 10.

For implementation of S1001, refer to S901.

S1002: A messaging subsystem sends fourth content to a multimedia content storage device.

Correspondingly, the multimedia content storage device receives the fourth content from the messaging subsystem.

For example, the messaging subsystem may send an HTTP POST (POST) message to the multimedia content storage device. The HTTP POST message may carry the fourth content.

S1003: The multimedia content storage device may send fifth content to the messaging subsystem.

Correspondingly, the messaging subsystem receives the fifth content from the multimedia content storage device. The fifth content may include a second hypertext link for storing the fourth content. For example, the multimedia content storage device may send an HTTP status code 200OK to the messaging subsystem, and carry the second hypertext link.

S1004: The multimedia content storage device sends the HTTP POST message to the MaaP device.

Correspondingly, the MaaP device receives the HTTP POST message from the multimedia content storage device.

For implementation of S1005 and S1006, refer to S902 and S903. A difference lies in that message content includes a first hypertext link.

S1007: A first terminal device sends a file request message to the multimedia content storage device.

Correspondingly, the multimedia content storage device receives the file request message from the first terminal device.

The file request message may be used to request the fourth content, and the file request message may carry the second hypertext link. For example, the file request message may be an HTTP GET message.

S1008: The multimedia content storage device sends the fourth content to the first terminal device.

Correspondingly, the first terminal device receives the fourth content from the multimedia content storage device. For example, the multimedia content storage device may send the HTTP status code 200OK to the messaging subsystem, and carry the fourth content.

Based on embodiments shown in FIG. 9 and FIG. 10, a set-top box may send an RCS message to the first terminal device.

The following describes communication apparatuses provided in embodiments of this application.

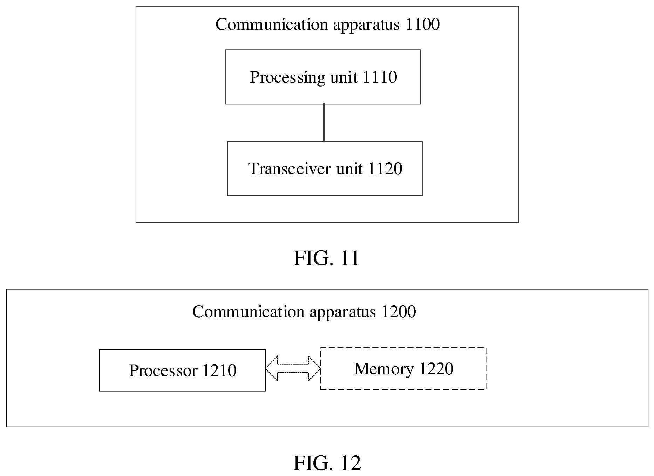

FIG. 11 is a block diagram of a communication apparatus 1100 according to an embodiment of this application. The communication apparatus 1100 may correspondingly implement functions or steps implemented by the first device, the second device, the service device, or the first terminal device in the foregoing method embodiments. The communication apparatus may include a processing unit 1110 and a transceiver unit 1120. Optionally, the communication apparatus may further include a storage unit. The storage unit may be configured to store instructions (code or a program) and/or data. The processing unit 1110 and the transceiver unit 1120 may be coupled to the storage unit. For example, the processing unit 1110 may read the instructions (the code or the program) and/or the data in the storage unit, to implement a corresponding method. The foregoing units may be independently disposed, or may be partially or completely integrated.

Optionally, the transceiver unit 1120 may include a sending unit and a receiving unit. The sending unit may be configured to perform all sending operations performed by the communication apparatus 1100, and the receiving unit may be configured to perform all receiving operations performed by the communication apparatus 1100.

In some possible implementations, the communication apparatus 1100 can correspondingly implement behaviors and functions of the first device or the like in the foregoing method embodiments. For example, the communication apparatus 1100 may be the first device, or may be a component (for example, a chip or a circuit) used in the first device. For example, the transceiver unit 1120 may be configured to perform all receiving or sending operations performed by the first device in the embodiment shown in FIG. 4, for example, S401 and S402 in the embodiment shown in FIG. 4 and/or another process used to support the technology described in this specification. The processing unit 1110 is configured to perform all operations that are other than sending and receiving operations and that are performed by the first device in the embodiment shown in FIG. 4.

For example, the transceiver unit 1120 is configured to obtain a service list from the service device. The service list includes service information of an RCS service. The processing unit 1110 is configured to access an RCS service based on the service information.

In some possible implementations, the communication apparatus 1100 can correspondingly implement the behaviors and functions of the first device or the like in the foregoing method embodiments. For example, the communication apparatus 1100 may be the service device, or may be a component (for example, a chip or a circuit) used in the service device. For example, the transceiver unit 1120 may be configured to perform all receiving or sending operations performed by the service device in the embodiment shown in FIG. 4, for example, S401 and S402 in the embodiment shown in FIG. 4 and/or another process used to support the technology described in this specification. The processing unit 1110 is configured to perform all operations that are other than sending and receiving operations and that are performed by the service device in the embodiment shown in FIG. 4.

For example, the transceiver unit 1120 is configured to receive a service list request message from the first device. The service list request message is used to request the service list of the first device. The processing unit 1110 is configured to generate the service list, and the service list includes the service information of the RCS service. The transceiver unit 1120 is further configured to send the service list to the first device.

In some possible implementations, the communication apparatus 1100 can correspondingly implement behaviors and functions of the second device in the foregoing method embodiments. For example, the communication apparatus 1100 may be the second device, or may be a component (for example, a chip or a circuit) used in the second device. For example, the transceiver unit 1120 may be configured to perform all receiving or sending operations performed by the second device in the embodiment shown in FIG. 5, for example, S501 in the embodiment shown in FIG. 5 and/or another process used to support the technology described in this specification. The processing unit 1110 is configured to perform another process used to support the technology described in this specification in the embodiment shown in FIG. 5, for example, S508 in the embodiment shown in FIG. 5, and/or another process used to support the technology described in this specification and all operations that are other than sending and receiving operations and that are performed by the second device.

For example, the transceiver unit 1120 is configured to receive a first message from a messaging as a platform device, where the first message includes a first identifier of the first terminal device and first content from the first terminal device. The processing unit 1110 is configured to determine the second device based on the first identifier and a correspondence. The correspondence is a correspondence between a second identifier of the first device and a third identifier of the first terminal device. The transceiver unit 1120 is further configured to send second content to the first device, where the second content is determined based on the first content.

In some possible implementations, the communication apparatus 1100 can correspondingly implement behaviors and functions of the first terminal device in the foregoing method embodiments. For example, the communication apparatus 1100 may be the first terminal device, or may be a component (for example, a chip or a circuit) used in the first terminal device. For example, the transceiver unit 1120 may be configured to perform all receiving or sending operations performed by the first terminal device in the embodiment shown in FIG. 5, for example, S503 in the embodiment shown in FIG. 5 and/or another process used to support the technology described in this specification. The processing unit 1110 is configured to perform all operations that are other than sending and receiving operations and that are performed by the first terminal device in the embodiment shown in FIG. 5.

For example, the transceiver unit 1120 is configured to receive a second message from the messaging as a platform device, where the second message is used to request to confirm a correspondence between a third identifier of the first device and a second identifier of the first terminal device. The processing unit 1110 is configured to generate a third message, where the third message indicates that the first terminal device confirms the correspondence. The transceiver unit 1120 is further configured to send the third message to the messaging as a platform device.

For operations performed by the processing unit 1110 and the transceiver unit 1120, refer to the related descriptions in the foregoing method embodiments.

It should be understood that the processing unit 1110 in this embodiment of this application may be implemented by a processor or a processor-related circuit component, and the transceiver unit 1120 may be implemented by a transceiver, a transceiver-related circuit component, or a communication interface.

Based on a same concept, as shown in FIG. 12, an embodiment of this application provides a communication apparatus 1200. The communication apparatus 1200 includes a processor 1210. Optionally, the communication apparatus 1200 may further include a memory 1220, which is configured to: store instructions executed by the processor 1210, store input data required by the processor 1210 to run the instructions, or store data generated after the processor 1210 runs the instructions. The processor 1210 may implement the method shown in the foregoing method embodiments based on the instructions stored in the memory 1220.

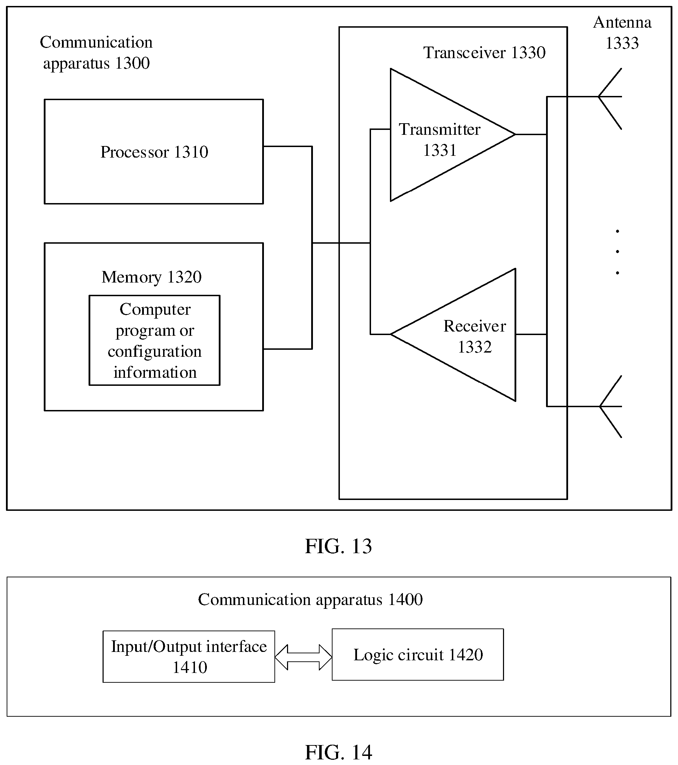

Based on a same concept, as shown in FIG. 13, an embodiment of this application provides a communication apparatus 1300. The communication apparatus 1300 may be a chip or a chip system. Optionally, in this embodiment of this application, the chip system may include a chip, or may include the chip and another discrete device.

The communication apparatus 1300 may include at least one processor 1310. The processor 1310 is coupled to a memory. Optionally, the memory may be located in the apparatus, or may be located outside the apparatus. For example, the communication apparatus 1300 may further include at least one memory 1320. The memory 1320 stores a computer program, configuration information, a computer program or instructions, and/or data that are/is necessary for implementing any one of the foregoing embodiments. The processor 1310 may execute the computer program stored in the memory 1320, to complete the method in any one of the foregoing embodiments.

The coupling in embodiments of this application may be an indirect coupling or a communication connection between apparatuses, units, or modules in an electrical form, a mechanical form, or another form, and is used for information exchange between the apparatuses, the units, or the modules. The processor 1310 may cooperate with the memory 1320. A specific connection medium between a transceiver 1330, the processor 1310, and the memory 1320 is not limited in embodiments of this application.

The communication apparatus 1300 may further include the transceiver 1330, and the communication apparatus 1300 may exchange information with another device through the transceiver 1330. The transceiver 1330 may be a circuit, a bus, a transceiver, or any other apparatus that can be used for information exchange, or is referred to as a signal sending and receiving unit. As shown in FIG. 13, the transceiver 1330 includes a transmitter 1331, a receiver 1332, and an antenna 1333. In addition, when the communication apparatus 1300 is a chip-type apparatus or circuit, the transceiver in the communication apparatus 1300 may alternatively be an input/output circuit and/or a communication interface, and may input data (or referred to as receiving data) and output data (or referred to as sending data). The processor is an integrated processor, a microprocessor, or an integrated circuit, and the processor may determine the output data based on the input data.

In a possible implementation, the communication apparatus 1300 may be used in a first device, a second device, a service device, or a first terminal device. Specifically, the communication apparatus 1300 may be the first device, the second device, the service device, or the first terminal device, or may be an apparatus that can support a terminal device in implementing a function of the first device, the second device, the service device, or the first terminal device in any one of the foregoing embodiments. The memory 1320 stores a computer program, a computer program or instructions, and/or data that are/is necessary for implementing a function of the communication apparatus in any one of the foregoing embodiments. The processor 1310 may execute the computer program stored in the memory 1320, to complete the method performed by the terminal device in any one of the foregoing embodiments.

The communication apparatus 1300 provided in this embodiment may be used in the first device, the second device, the service device, or the first terminal device, to complete a method performed by the first device, the second device, the service device, or the first terminal device. Therefore, for technical effects that can be achieved by the communication apparatus 1300, refer to the foregoing method embodiments. Details are not described herein again.

In this embodiment of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by a combination of hardware in the processor and a software module.

In this embodiment of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be used to carry or store expected program code in a form of instruction or data structure and that can be accessed by a computer, but is not limited thereto. The memory in this embodiment of this application may alternatively be a circuit or any other apparatus that can implement a storage function, and is configured to store a computer program, a computer program or instructions, and/or data.

Based on the foregoing embodiments, with reference to FIG. 14, an embodiment of this application further provides another communication apparatus 1400, including an input/output interface 1410 and a logic circuit 1420. The input/output interface 1410 is configured to: receive code instructions, and transmit the code instructions to the logic circuit 1420. The logic circuit 1420 is configured to run the code instructions to perform a method performed by the first device, the second device, the service device, or the first terminal device in any one of the foregoing embodiments.

Optionally, the input/output interface 1410 may be an interface on a chip, and the logic circuit 1420 may be one or more processors. Optionally, the one or more processors may be located in the apparatus, or may be located outside the apparatus.

The communication apparatus 1400 provided in this embodiment may be used in the first device, the second device, the service device, or the first terminal device, to complete the method performed by the first device, the second device, the service device, or the first terminal device. Therefore, for technical effects that can be achieved by the communication apparatus 1400, refer to the foregoing method embodiments. Details are not described herein again.

According to the foregoing embodiments, an embodiment of this application further provides a communication system. The communication system includes at least one communication apparatus used in a second device, at least one communication apparatus used in a messaging as a platform device, and at least one communication apparatus used in a first device. Optionally, the communication system further includes at least one communication apparatus used in a first terminal device. Optionally, the communication system may further include at least one communication apparatus used in a service device. For technical effects that can be achieved by the communication system, refer to the foregoing method embodiments. Details are not described herein again.

Based on the foregoing embodiments, an embodiment of this application further provides a system. The communication system includes at least one communication apparatus used in a first device and at least one communication apparatus used in a service device.

Based on the foregoing embodiments, an embodiment of this application further provides a computer-readable storage medium. The computer-readable storage medium stores a computer program or instructions. When the instructions are executed, a method performed by the terminal device or the network device in any one of the foregoing embodiments is implemented. The computer-readable storage medium may include any medium that can store program code, for example, a USB flash drive, a removable hard disk, a read-only memory, a random access memory, a magnetic disk, or an optical disc.

To implement functions of the communication apparatuses in FIG. 11 to FIG. 14, an embodiment of this application further provides a chip, which includes a processor, and is configured to support the communication apparatus in implementing functions of the terminal device or the network device in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may use a form of computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program or instructions may be used to implement each procedure and/or each block in the flowcharts and/or the block diagrams and a combination of a procedure and/or a block in the flowcharts and/or the block diagrams. The computer program or instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more procedures in the flowcharts and/or in one or more blocks in the block diagrams.

The computer program or the instructions may alternatively be stored in a computer-readable memory that can indicate the computer or the another programmable data processing device to operate in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program or instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

## Claims

1. A message transmission method, comprising:
receiving a first message from a messaging as a platform device, wherein the first message comprises a first identifier of a first terminal device and first content from the first terminal device; and
sending second content to a first device based on the first identifier and a correspondence, wherein the second content is determined based on the first content, wherein;
the correspondence is a correspondence between a second identifier of the first device and a third identifier of the first terminal device.

2. The method according to claim 1, further comprising:
receiving a first request message from the first device, wherein the first request message comprises the correspondence between the second identifier and the third identifier.

3. The method according to claim 2, further comprising:
sending a second message to the first terminal device through the messaging as a platform device, wherein the second message is used to request the first terminal device to confirm the correspondence;
receiving a third message from the messaging as a platform device, wherein the third message indicates that the first terminal device confirms the correspondence; and
storing the correspondence between the second identifier and the third identifier.

4. The method according to claim 1, further comprising:
receiving a second request message from the first device, wherein the second request message comprises the second identifier;
receiving a fourth message from the messaging as a platform device, wherein the fourth message comprises the first identifier and third content from the first terminal device, and the third content comprises the second identifier; and
storing the correspondence between the second identifier and the third identifier.

5. The method according to claim 1, further comprising:
receiving a third request message from a management platform, wherein the third request message comprises the second identifier and the third identifier.

6. The method according to claim 1, wherein when the first message is a text message, the second content is the first content.

7. The method according to claim 1, wherein when the first message is a file transfer message, the method further comprises:
obtaining the second content from a multimedia content storage device based on a first hypertext link, wherein the first content comprises the first text link.

8. The method according to claim 1, further comprising:
receiving a fifth message from the first device, wherein the fifth message comprises a fourth identifier of the first terminal device and fourth content; and
sending a sixth message to the messaging as a platform device, wherein the sixth message comprises the fourth identifier and fifth content, and the fifth content is determined based on the fourth content.

9. The method according to claim 8, wherein when the fifth message is a text message, the fifth content is the fourth content.

10. The method according to claim 8, wherein when the fifth message is a file transfer message, the method further comprises:
sending the fourth content to a multimedia content storage device; and
receiving a second hypertext link from the multimedia content storage device, wherein the second hypertext link is an address that is of the fourth content and that is stored in the multimedia content storage device, and the fifth content comprises the second hypertext link.

11. The method according to claim 2 or 5, further comprising:
sending a first card message to the first terminal device through the messaging as a platform device, wherein the first card message comprises a suggested action for message sending;
receiving a seventh message from the messaging as a platform device, wherein the seventh message comprises sixth content, the sixth content comprises the second identifier, and the second identifier is added to the sixth content by the first terminal device based on the suggested action for message sending of the first card message; and
storing the correspondence between the second identifier and the third identifier.

12. A message transmission method, comprising:
receiving an eighth message from a messaging as a platform device, wherein the eighth message comprises seventh content from a first terminal device, the seventh content comprises a second identifier, the second identifier is added to the seventh content by the first terminal device based on a suggested action for message sending of a received first card message, and the second identifier corresponds to a first device; and
sending a ninth message to the first device based on the second identifier, wherein the ninth message comprises eighth content, and the eighth content is determined based on the seventh content.

13. The method according to claim 12, wherein before receiving the eighth message from the messaging as a platform device, the method further comprises:
receiving a registration request message from the first device, wherein the registration request message comprises a first identifier of the first terminal device; and
sending the first card message to the first terminal device through the messaging as a platform.

14. The method according to claim 13, wherein when the eighth message is a text message, the eighth content is the seventh content.

15. The method according to claim 13, wherein when the eighth message is a file transfer message, the method further comprises:
obtaining the eighth content from a multimedia content storage device based on a third hypertext link, wherein the seventh content comprises the third hypertext link.

16. A service discovery method, comprising:
obtaining a service list from a service device, wherein the service list comprises service information of a rich communication service RCS service; and
accessing the RCS service based on the service information.

17. The method according to claim 16, wherein the service information further comprises one or more of the following:
service type indication information of the RCS service, service instance information of the RCS service, and information about a linked application of the RCS service.

18. The method according to claim 17, wherein when the service information comprises the service instance information of the RCS service, the service instance information further comprises a service access address of the RCS.

19. The method according to claim 18, wherein the service instance information of the RCS service further comprises a service access protocol of the RCS and a service launch type of the RCS, wherein the service launch type is that the RCS service is launched after the first device is started.

20. The method according to claim 17, wherein when the service information comprises the information about the linked application of the RCS service, the service information further comprises a startup type of the linked application, and the service launch type is that the RCS service is launched after the first device is started.

21. The method according to claim 16 or 17, further comprising:
sending a first request message to a second device based on the service information, wherein the first request message comprises a correspondence between an identifier of the first device and an identifier of the first terminal device, the first request message is used to request to associate the first device with the first terminal device, and the first terminal device is a terminal device that interacts with the first device through the RCS service;
sending a first request message to a second device based on the service information, wherein the first request message comprises an identifier of the first device, and the first request message is used to request to register the first device; or
sending a first request message to a second device based on the service information, wherein the first request message comprises an identifier of the first device and an identifier of a third terminal device, and the third terminal device is a terminal device that manages the RCS service of the first device.

22. A service discovery method, comprising:
receiving a service list request message from a first device, wherein the service list request message is used to request a service list of the first device; and
sending the service list to the first device, wherein the service list comprises service information of a rich communication service RCS service.

23. The method according to claim 22, wherein the service information further comprises one or more of the following:
service type indication information of the RCS service, service instance information of the RCS service, and information about a linked application of the RCS service.

24. The method according to claim 23, wherein when the service information comprises the service instance information of the RCS service, the service instance information further comprises a service access address of the RCS.

25. The method according to claim 24, wherein the service instance information of the RCS service further comprises a service access protocol of the RCS and a service launch type of the RCS, wherein the service launch type is that the RCS service is launched after the first device is started.

26. The method according to claim 23, wherein when the service information comprises the information about the linked application of the RCS service, the service information further comprises a startup type of the linked application, and the service launch type is that the RCS service is launched after the first device is started.

27. A message transmission method, applied to a first terminal device, comprising:
receiving a second message from a messaging as a platform device, wherein the second message is used to request to confirm a correspondence between a second identifier of a first device and a third identifier of the first terminal device; and
sending a third message to the messaging as a platform device, wherein the third message indicates that the first terminal device confirms the correspondence.

28. The method according to claim 27, further comprising:
sending a first message to the messaging as a platform device, wherein the first message comprises a first identifier of the first terminal device and first content sent by the first terminal device.

29. The method according to claim 27 or 28, wherein receiving the second message from the messaging as a platform device comprises:
the second message is a first card message, and the first card message comprises a suggested action for message sending; and
sending a ninth message to the messaging as a platform device, wherein the ninth message comprises the first identifier and sixth content, the sixth content comprises the second identifier, and the second identifier is added to the sixth content by the first terminal device based on the suggested action for message sending.

30. The method according to claim 29, further comprising:
sending a second card message to a second terminal device, wherein the second card message is generated based on the first card message, and the second card message comprises the suggested action for message sending and the second identifier.

31. A communication apparatus, comprising a unit configured to perform the method according to any one of claims 1 to 11, comprising a unit configured to perform the method according to any one of claims 12 to 15, comprising a unit configured to perform the method according to any one of claims 16 to 21, comprising a unit configured to perform the method according to any one of claims 22 to 26, or comprising a unit configured to perform the method according to any one of claims 27 to 30.

32. A computer-readable storage medium, wherein the computer-readable storage medium stores computer-executable instructions, and when the computer-executable instructions are invoked by an electronic apparatus, the electronic apparatus is enabled to perform the method according to any one of claims 1 to 11, the electronic apparatus is enabled to perform the method according to any one of claims 12 to 15, the electronic apparatus is enabled to perform the method according to any one of claims 16 to 21, the electronic apparatus is enabled to perform the method according to any one of claims 22 to 26, or the electronic apparatus is enabled to perform the method according to any one of claims 27 to 30.

33. A chip system, wherein the chip system comprises:
a communication interface; and
a processor, configured to invoke and run the instructions through the communication interface, so that a device on which the chip system is installed performs the method according to any one of claims 1 to 11, a device on which the chip system is installed performs the method according to any one of claims 12 to 15, a device on which the chip system is installed performs the method according to any one of claims 16 to 21, a device on which the chip system is installed performs the method according to any one of claims 22 to 26, or a device on which the chip system is installed performs the method according to any one of claims 27 to 30.
